(19) Europäisches Patentamt
European Patent Office
Office européen des brevets

(11) **EP 3 119 023 A1**

(12) **EUROPEAN PATENT APPLICATION**

(43) Date of publication:
**18.01.2017 Bulletin 2017/03**

(51) Int Cl.:
*H04L 5/00* (2006.01)   *H04L 5/02* (2006.01)
*H04L 27/26* (2006.01)

(21) Application number: **15306161.9**

(22) Date of filing: **16.07.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Alcatel Lucent
92100 Boulogne-Billancourt (FR)**

(72) Inventor: **GACANIN, Haris
2018 Antwerp (BE)**

(74) Representative: **ALU Antw Patent Attorneys
Copernicuslaan 50
2018 Antwerpen (BE)**

(54) **METHODS FOR MULTIPLEXING AND ASSIGNING UPINK REFERENCE SIGNALS IN A RADIO COMMUNICATION SYSTEM WITH A FIRST NETWORK NODE AND A SECOND NETWORK NODE**

(57) The embodiments of the invention relate to a method for a first network node (MS-1, MS-2, ..., MS-U) of a radio communication system (MMCS) which contains the steps of generating at least one reference signal (RS-1, RS-2, ..., RS-U) based on a predefined delay time multiplexing parameter and a predefined multiplexing code for an unequivocal identification of the at least one reference signal (RS-1, RS-2, ..., RS-U) and transmitting the at least one reference signal (RS-1, RS-2, ..., RS-U) to the second network node (BS). The embodiments further relate to a method for a second network node (BS) of a radio communication system (MMCS) which contains the step of receiving from at least one first network node (MS-1, MS-2, .., MS-U) at least one reference signal (RS-1, RS-2, .., RS-U) which has been generated based on at least one predefined delay time multiplexing parameter and at least one predefined multiplexing code for an unequivocal identification of the at least one reference signal (RS-1, RS-2, ..., RS-U). The method for the second network node (BS) further contains the step of determining at least one channel estimate of at least one transmission channel (RL-1, RL-2, ..., RL-U) from the at least one first network node (MS-1, MS-2, ..., MS-U) to the second network node (BS) based on the received at least one reference signal (RS-1, RS-2, ..., RS-U), based on the at least one predefined delay time multiplexing parameter and based on at least one predefined de-multiplexing code that is correlated to the at least one predefined multiplexing code. The embodiments even further relate to a first network node (MS-1, MS-2, ..., MS-U) and a second network node (BS).

*FIG. 3*

**Description**

**FIELD OF THE INVENTION**

The present invention relates to transmission of reference signals in a radio communication system and, more particularly but not exclusively, to a coordinated transmission of reference signals in massive MIMO radio communication systems.

**BACKGROUND OF THE INVENTION**

This section introduces aspects that may be helpful in facilitating a better understanding of the invention. Accordingly, the statements of this section are to be read in this light and are not to be understood as admission about what is in the prior art.

In a massive MIMO radio communication system an antenna system which is connected to a base station may be equipped with a number M of antenna elements to communicate with a number U of mobile stations which are usually equipped with antenna systems having only a single antenna element. The number $M$ of antenna elements may be preferably much larger, e.g. twice larger, than the number $U$ of mobile stations. Massive MIMO is intended to increase transmission capacity in radio communication systems with high energy efficiency at the base station and at the mobile stations.

However, massive MIMO relies on beamforming (i.e. coherent detection) or spatial multiplexing that requires an accurate knowledge of CSI (CSI = Channel State Information). When applying an FDD transmission scheme between the base station and a mobile station (FDD = Frequency Division Duplex) a downlink frequency range is used for downlink transmissions from the base station to the mobile station and an uplink frequency range different to the downlink frequency range is used for uplink transmissions from the mobile station to the base station. In such a case, separate channel estimation would be required for both the downlink transmissions and the uplink transmissions which means that so-called common pilot signals or so-called dedicated pilot signals need to be transmitted in both directions between the base station and the mobile station and the mobile station has to signal CSI to the base station so that the base station can adapt the downlink transmission.

Signaling of CSI from the mobile station to the base station for the downlink can be avoided if a TDD transmission scheme (TDD = Time Division Duplex) is alternatively applied between the base station and the mobile station. In such further case, the downlink transmission from the base station to the mobile station and the uplink transmission from the mobile station to the base station use a same frequency range and the downlink transmission and the uplink transmission are executed in an alternating way.

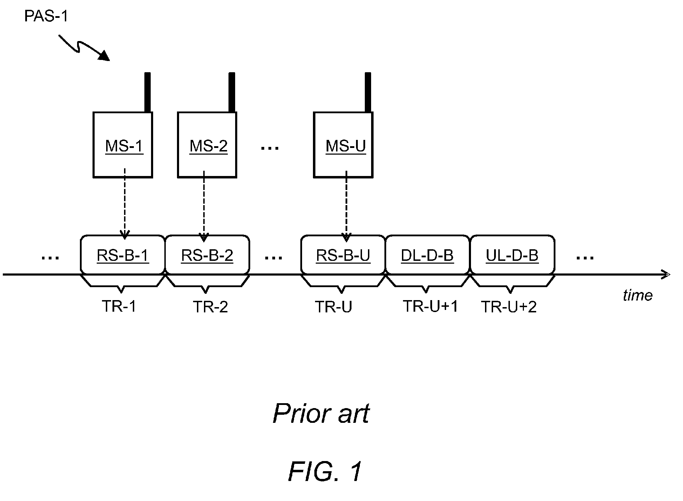

Pilot signals which are transmitted by different mobile stations may be designed to enable a transmission of non-overlapping pilot signals using either a separation in time or a separation in frequency. As an example of such a separation, Figure 1 shows a pilot allocation scheme PAS-1 for separating pilot signals of different mobile stations sequenced time by allocating the pilot signals to a number $U$ of successive radio resource blocks RS-B-1, RS-B-2, ..., RS-B-U dedicated for pilot signal transmissions. The radio resource blocks RS-B-1, RS-B-2, ..., RS-B-U for pilot signal transmissions are interleaved in time in a TDD fashion with a downlink radio resource block DL-D for the downlink transmission and an uplink radio resource block UL-D-B for the uplink transmission.

A first pilot signal is allocated to a first radio resource block RS-B-1 and is transmitted during a first time range TR-1 from a first mobile station MS-1 to the base station. The first time range TR-1 may be for example a sub-frame of time length of 1 ms such as used in LTE (LTE = Long Term Evolution). In a same way, a second pilot signal equal to the first pilot signal is allocated to a second radio resource block RS-B-2 and is transmitted during a second time range TR-2 from a second mobile station MS-2 to the base station up to U-th pilot signal equal to the first pilot signal is allocated to a U-th radio resource block RS-B-U and is transmitted during a U-th time range TR-U from a U-th mobile station MS-U to the base station. Pilot signals are usually generated by one of the mobile stations MS-1, ..., MS-U independently from a generation of pilot signals by a further one of the mobile stations MS-1, ..., MS-U based on a single basic reference pilot sequence. Downlink data are allocated to a downlink radio resource block DL-D-B and are transmitted during a further time range TR-U+1 from the base station to one of the mobile stations MS-1, MS-2, ..., MS-U. The downlink data may be for example user data of an mp3 music stream. Uplink data are allocated to an uplink radio resource block UL-D-B and are transmitted during an even further time range TR-U+2 from one of the $U$ mobile stations to the base station. The uplink data may be for example user data of a video upload.

By such a successive transmission, each mobile station MS-1, MS-2, ..., MS-U is given a single dedicated time resource (one of the time ranges TR-1, .... TR-U) for pilot transmission to avoid interference from pilot transmissions from other mobile stations. If the number $U$ of mobile stations is increasing this approach provides a problem of reduced transmission efficiency because more and more time resources are required for pilot signal transmission and fewer time resources can be used for a transmission of uplink data and/or downlink data.

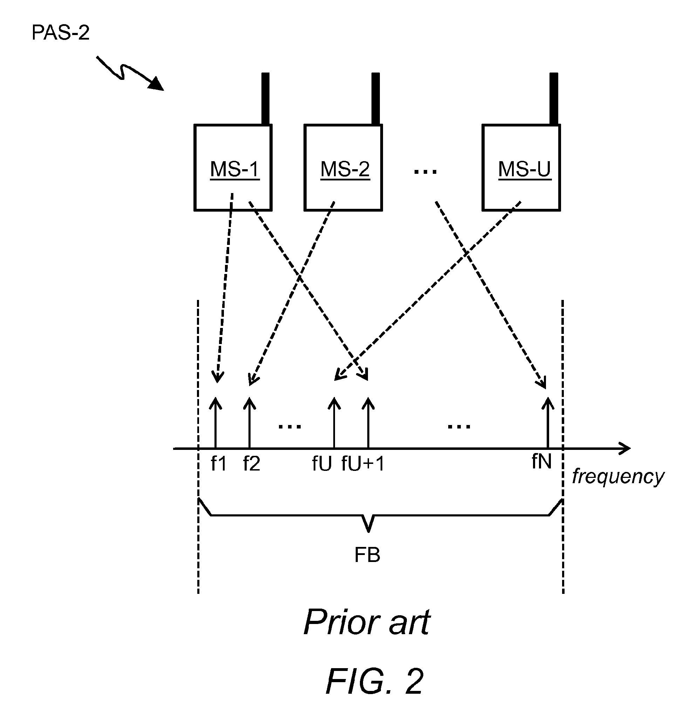

Figure 2 shows a further pilot allocation scheme PAS-2 for separating pilot signals of different mobile stations in frequency by allocating the pilot signals to a number $N$ of frequency subcarriers f1, f2, ..., fU, fU+1, fU+2, ..., FN within a predefined frequency band FB such as applied for an OFDM radio communication system (OFDM = Orthogonal Frequency Division Multiplexing). During a predefined time range for transmitting pilot signals, all mobile stations MS-1, ..., MS-U are allowed to transmit at least one pilot signal via at least one of the frequency subcarriers f1, f2, ..., fU, fU+1, ..., FN. The first mobile station MS-1 may be allocated for example frequency subcarriers f1, fU+1, ... for transmitting via each one of the frequency subcarriers f1, fU+1, ... a pilot signal to the base station BS. In a same way, the second mobile station MS-2 may be allocated for example frequency subcarriers f2, fU+2 (not shown for simplification), ... for transmitting via each one of the frequency subcarriers f2, fU+2, ... a pilot signal to the base station BS. Such an allocation is continued up to the U-th mobile station MS-U which may be allocated for example frequency subcarrier fU for transmitting a pilot signal to the base station BS. Such an allocation of pilot signals to frequency subcarriers is a so-called pilot multiplexing in the frequency domain.

The relation $L \cdot U \leq N'$ can be interpreted as a U-order multiplexing requirement in frequency domain where $L$ is an minimum number of estimated non-overlapping frequency subcarriers per mobile station which is required to estimate all channel paths between one of the mobile stations MS-1, MS-2, ... MS-U and the base station. Alternatively, a multiplexing in time domain of channel impulse responses has to provide a minimum of $L$ non-overlapping samples per mobile station in order to capture all available channel paths.

$N'$ may be equal to the number $N$ of subcarriers of the predefined frequency band FB or maybe a predefined number of IFFT/FFT sampling points (IFFT = Inverse Fast Fourier Transformation, FFT = Fast Fourier Transformation).

If the number $U$ of mobile stations is increasing the product $L \cdot U$ is also increasing and the relation $L \cdot U \leq N'$ cannot be further fulfilled and will change into a relation $L \cdot U > N'$. In such a case, an overlapping of frequency subcarriers in the frequency domain (or an overlapping of time samples in the time domain) cannot be avoided anymore and the pilot signals from the mobile stations MS-1, ..., MS-U cannot be received interference-free which means that pilot signals from two or more mobile stations are interfering each other during reception at the base station.

## SUMMARY

Objects of the embodiments of the invention are to provide improved pilot signals for massive MIMO radio communication systems.

The objects are achieved by a method for a first network node of a radio communication system. The method for the first network node contains generating at least one reference signal based on a predefined delay time multiplexing parameter and a predefined multiplexing code for an unequivocal identification of the first network node at a second network node of the radio communication system. The method for the first network node further contains transmitting the at least one reference signal to the second network node.

The objects are further achieved by a method for a second network node of a radio communication system. The method for the second network node contains receiving from at least one first network node at least one reference signal which has been generated based on at least one predefined delay time multiplexing parameter and at least one predefined multiplexing code for an unequivocal identification of the at least one reference signal. The method for the second network node further contains determining at least one channel estimate of at least one transmission channel from the at least one first network node to the second network node based on the received at least one reference signal, based on the at least one predefined delay time multiplexing parameter and based on at least one predefined de-multiplexing code which is correlated to the at least one predefined multiplexing code.

The objects are even further achieved by a computer program product having stored a program code for performing either the method for the first network node or the method for the second network, when the program code is executed on at least one computer or at least one processor unit.

The objects are even further achieved by a first network node for a radio communication system. The first network node contains a processing unit which is configured to generate at least one reference signal based on a predefined delay time multiplexing parameter and a predefined multiplexing code for an unequivocal identification of the at least one reference signal. The first network node further contains a transmitter unit which is configured to transmit the at least one reference signal to the second network node. The first network node may be preferably a mobile station.

The objects are even further achieved by a second network node for a radio communication system. The second network node contains a receiver unit which is configured to receive from at least one first network node at least one reference signal which is generated based on at least one predefined delay time multiplexing parameter and at least one predefined multiplexing code for an unequivocal identification of the at least one reference signal. The second network node further contains a channel estimation unit which is configured to determine at least one channel estimate of at least one transmission channel from the at least one first network node to the second network node based on the received at least one reference signal, based on the at least one predefined delay time multiplexing parameter and based on at least one predefined de-multiplexing code which is correlated to the at least one predefined multiplexing code.

The method for the first network node, the method for the second network node, the computer program product, the first network node and the second network node as described above provide unequivocally identifiable reference signals which are transmitted by two or more mobile stations for example to a base station. Thereby, interference between reference signals which are received from different mobile stations can be kept at a low level. Especially in case of massive MIMO radio communication systems, overhead such as signalling time slots for the mobile stations to transmit channel quality indicators from the mobile stations to the radio access network node for multi-user channel estimation at the radio access network node can be reduced. Furthermore, a quality of channel estimation for each of the mobile stations at the radio access network node can be retained even if a number of mobile stations to be served increases.

In a preferred embodiment, the determining of the channel estimates contains demodulating the received at least one reference signal for obtaining at least one channel impulse response of the at least one transmission channel. The determining of the channel estimates further contains delay-time decoupling of the at least one channel impulse response based on the at least one predefined delay time multiplexing parameter for obtaining at least one filtered channel impulse response. The determining of the channel estimates even further contains code de-multiplexing of the at least one filtered channel impulse response based on the at least one predefined de-multiplexing code for obtaining at least one de-multiplexed channel impulse response and interpolating the at least one de-multiplexed channel impulse response for obtaining the at least one channel estimate.

According to a further preferred embodiment, the generating step may contain delay time multiplexing based on the predefined delay time multiplexing parameter and code multiplexing based on the predefined multiplexing code. This allows for a two dimensional parameter space which is large enough for differentiating reference signals even for a large number of mobile stations such as 50 or even more which are served by the radio access network node.

In an even further preferred embodiment, the predefined multiplexing code may be a predefined set of code multiplexing parameters for frequency subcarriers of a predefined frequency range used for operating a transmission channel between the second network node and the first network node and the set of code multiplexing parameters comprises a parameter for each of the frequency subcarriers of the predefined frequency range.

In a further preferred embodiment, the generating step may contain generating the at least one reference signal based on equation

$$P_i(f_n) = P(f_n) \cdot C_i(f_n) \cdot \exp\left(-j2\pi\theta_i \frac{n}{N}\right)$$

with $P_i(f_n)$ being the at least one reference signal for the mobile station with index $i$ and for a frequency subcarrier $f_n$ of the predefined frequency range, $P(f_n)$ being a single basic reference pilot sequence, $\exp\left(-j2\pi\theta_i \frac{n}{N}\right)$ being a multiplication factor for the single basic reference pilot sequence $P(f_n)$, $\theta_i$ being the predefined delay time multiplexing parameter for the first network node with the index $i$, $n$ being an integer between 0 and , $N$ being an overall number of frequency subcarriers of the predefined frequency range used for operating a transmission channel between the second network node and the first network node and $C_i(f_n)$ being an element of the predefined set of coding multiplexing parameters for the first network node with index $i$ and for the frequency subcarrier $f_n$.

With respect to a further embodiment, the method for the first network node may further contain receiving information from the second network node about the predefined delay time multiplexing parameter and the predefined multiplexing code and the at least one reference signal may be generated based on the information.

According to another embodiment, the information may be an indicator for a parameter set which contains the predefined delay time multiplexing parameter and the predefined multiplexing code. The method for the first network node may further contain selecting the parameter set based on the indicator from a database of the first network node. The database may contain a mapping between at least two indicators including the indicator and at least one further indicator and at least two parameter sets including the parameter set and at least one further parameter set in which the at least one further parameter set has at least one parameter which is different to the predefined delay time multiplexing parameter or to the predefined multiplexing code. This embodiment allows to reduce a signaling amount from the second network node to the first network node because not the parameter set itself is transmitted but an indicator for the parameter set.

In a further embodiment, the method for the second network node may further contain selecting the predefined delay time multiplexing parameter and the predefined multiplexing code for the transmission of the at least one first reference signal by the at least one first network node and transmitting information about the predefined delay time multiplexing parameter and the predefined multiplexing code to the at least one first network node for instructing the at least one first network node to generate and transmit the at least one first reference signal by applying the predefined delay time multiplexing parameter and the predefined multiplexing code.

In a further embodiment, the method for the second network node may further contain generating the predefined multiplexing code or the predefined de-multiplexing code by a random sequence of integers or rational numbers.

According an even further preferred embodiment, a number of elements of the predefined multiplexing code may be equal to an overall number of frequency subcarriers of a spectral range for operating the transmission channel between the second network node and the at least one first network node.

In a further embodiment, the method for the second network node may further contain transmitting a scheduling instruction to the at least one first network node instructing the at least one first network node to transmit the at least one first reference signal during a predefined time range or during a predefined signaling interval. This provides the advantage to transmit all reference signals from all mobile stations or at least a large number of reference signals of a large number of mobile stations at a same time range to free remaining time ranges for downlink transmission or uplink transmission for increasing a transmission capacity of the transmission channels between the base station and the mobile stations.

According to a preferred embodiment, wherein the method for the second network node may further contain operating an antenna system connected to the second network node for serving the at least one first network node in a massive MIMO mode by applying a predefined number of massive MIMO antenna elements equal to or above a predefined minimum number of massive MIMO antenna elements. Preferably, the predefined minimum number of massive MIMO antenna elements may be 100.

Further advantageous features of the embodiments of the invention are defined and are described in the following detailed description.

## BRIEF DESCRIPTION OF THE FIGURES

The embodiments of the invention will become apparent in the following detailed description and will be illustrated by accompanying figures given by way of non-limiting illustrations.

Figure 1 shows schematically a known pilot allocation scheme for transmitting pilot signals from several mobile stations to a base station by allocating the pilot signals to successive time ranges.

Figure 2 shows schematically a further known pilot allocation scheme for transmitting pilot signals from several mobile stations to a base station by allocating pilot signals to frequency subcarriers of a predefined frequency band.

Figure 3 shows schematically a massive MIMO communication system containing a base station and several mobile stations in a radio cell of the base station according to an exemplarily embodiment of the invention.

Figure 4 shows schematically a pilot allocation scheme for transmitting pilot signals from several mobile stations to a base station according to an exemplarily embodiment of the invention.

Figure 5 shows schematically a block diagram how the pilot signals of the mobile stations are uniquely marked by a coding based on predefined multiplexing codes according to an exemplarily embodiment of the invention.

Figure 6 shows schematically a flow diagram of a method for a mobile station of a radio communication system using unequivocally identifiable reference signals according to an exemplarily embodiment of the invention.

Figure 7 shows schematically a block diagram of a mobile station for a radio communication system using unequivocally identifiable reference signals according to an exemplarily embodiment of the invention.

Figure 8 shows schematically a flow diagram of a method for a base station of a radio communication system according to an exemplarily embodiment of the invention.

Figure 9 shows a characteristic diagram of calculated effective channel impulse responses as a function of delay time after a demodulation of received reference signals according to an exemplarily embodiment of the invention.

Figure 10 a) and 10 b) show two further characteristic diagrams with the calculated effective channel impulse responses as shown in Figure 9 and with rectangular filtering functions for delay-time decoupling according to an exemplarily embodiment of the invention.

Figure 11 shows schematically a block diagram of a base station for a radio communication system according to an exemplarily embodiment of the invention.

## DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A splitting of processing functions across processing units shown in the Figures is not critical, and as can be understood by those skilled in the art that the number of processing units, the number of processing functions and an allocation of the processing functions to the processing units may vary without departing from the scope of the embodiments of the invention as defined in the appended claims. The number of the steps for performing the method(s) is not critical, and as can be understood by those skilled in the art that the number of the steps and the sequence of the steps may vary without departing from the scope of the embodiments of the invention as defined in the appended claims.

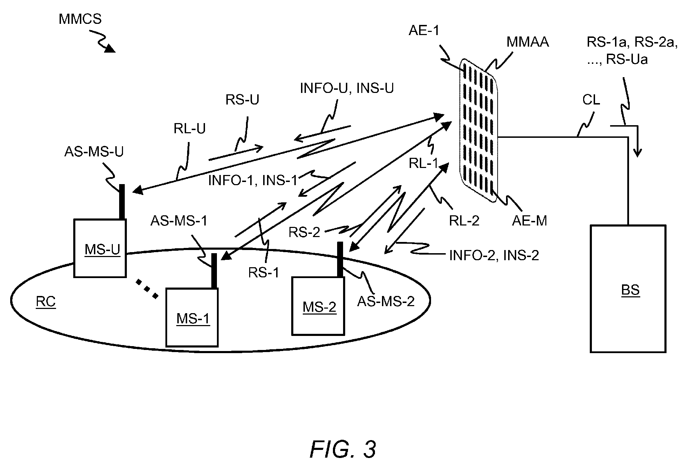

Figure 3 shows schematically and exemplarily a massive MIMO communication system MMCS containing a radio access network node BS and a number U of mobile stations MS-1, MS-2, ..., MS-U in a radio cell RC of the radio access network node BS. In alternative embodiments, the massive MIMO communication system MMCS may contain further radio access network nodes, further radio cells and further mobile stations which are not shown for simplification. The number U of mobile stations MS-1, MS-2, ..., MS-U may be at least two and may be for example preferably in a range of 20, 50 or 100 mobile stations.

In a further alternative, a massive MIMO communication may be applied between two radio access network nodes such as base stations of a cellular communication system or access points of a WLAN (WLAN = Wireless Local Area Network). In an even further alternative, a massive MIMO communication may be applied for example from a mobile station such as a high speed train to a base station.

The term "massive MIMO" may be considered synonymous to and/or referred to as Large-Scale Antenna Systems, Very Large MIMO, Hyper MIMO, and Full-Dimension MIMO which apply a very large number of antenna elements (e.g., hundreds or thousands) that are operated fully coherently and adaptively. Such a huge number of antenna elements helps focusing a transmission and reception of signal energy into ever-smaller regions of space.

The massive MIMO communication system MMCS may be for example a radio communication system based on one of the following wireless communication techniques: WLAN as being defined by one of the IEEE 802.11 standards (IEEE = Institute of Electrical and Electronics Engineers), WiMAX (WiMAX = Worldwide Interoperability for Microwave Access) as being ratified by the WiMAX Forum, LTE Advanced or 5G (5G = Fifth Generation) as being defined by 3GPP.

In the following it is assumed that the massive MIMO communication system MMCS applied an OFDM based modulation.

The term "radio cell" may be considered synonymous to and/or referred to as radio cell, cell, radio sector, sector etc. The radio cell RC as shown in Figure 3 is exemplarily sketched in a form of a circle for simplification without limiting the invention to such form of the radio cell RC.

The term "radio access network node" may be considered synonymous to and/or referred to as base station, base transceiver station, access point base station, access point, macro base station, femto base station, pico base station etc. and may describe equipment that provides wireless connectivity via one or more transmission channels to one or more mobile stations.

The term "macro base station" may be considered synonymous to and/or referred to a base station, which provides a radio cell having a size in a range of several hundred meters up to several kilometres. A macro base station usually has a maximum output power of typically tens of watts. The term "macro radio cell" may be considered synonymous to and/or referred to a radio cell, which provides the widest range of all radio cell sizes. Macro cells are usually found in rural areas or along highways.

The term "femto base station" may be considered synonymous to and/or referred to a small, low-power cellular base station, typically designed for use in a home or small business. A broader term which is more widespread in the industry is small cell, with femto cell as a subset.

The term "pico base station" may be considered synonymous to and/or referred to a small cellular base station typically covering a small area so-called pico cell, such as in-building (offices, shopping malls, train stations, stock exchanges, etc.), or more recently in-aircraft. In cellular networks, pico cells are typically used to extend coverage to indoor areas where outdoor signals do not reach well, or to add network capacity in areas with very dense phone usage, such as train stations.

The term "mobile station" may be considered synonymous to, and may hereafter be occasionally referred to, as a mobile unit, mobile user, access terminal, a UE (UE = user equipment), a subscriber, a user, a cellular telephone, a smart phone, a portable computer, a pocket computer, a hand-held computer, a PDA (PDA = Personal Digital Assistant), a USB stick (USB = Universal Serial Bus), a smart watch, a sensor such as a sensor for meteorological data, an RFID tag, a head mounted display such as a Google glass or a car-mounted mobile device such as a repeater or relay.

The term "repeater" may be considered synonymous to and/or referred to as an electronic device that receives a signal and simply retransmits it at a higher level or higher power, or onto another side of an obstruction, so that the signal can cover longer distances.

The term "relay" may be considered synonymous to and/or referred to as an electronic radio communication device that receives a signal and retransmits a different signal not only at a higher level or higher power, but also at a different frequency and/or different time range and/or spreading code, to increase capacity in a wireless access network and to improve wireless link performance.

The radio access network node BS is connected by a connection line CL to a massive MIMO antenna system MMAA. The connection line CL may be based for example on the so-called CIPRI protocol (CIPRI = Common Public Radio Interface). The massive MIMO antenna system MMAA contains a predefined number M of antenna elements AE-1, ..., AE-M which may be equal to or above a predefined minimum number $M_0$ of antenna elements. The predefined minimum number $M_0$ of antenna elements may be for example 100. This means that the pre-defined number M of antenna elements AE-1, ..., AE-M may be for example 100, 150, 200 or even more. The antenna elements AE-1, .., AE-M may be arranged preferably in a matrix form of several rows and several columns as shown in Figure 3. In an alternative embodiment, the massive MIMO antenna system MMAA may be replaced by a convention multi-antenna element antenna system which contains for example only four, eight or sixteen antenna elements, which are arranged in a matrix form or a line form.

A first one MS-1 of the mobile stations MS-1, MS-2, ..., MS-U contains an antenna system AS-MS-1 and is connected via a first transmission channel RL-1 between the antenna system AS-MS-1 and the massive MIMO antenna system MMAA to the radio access network node BS. In a same way, a second one MS-2 of the mobile stations MS-1, MS-2, ..., MS-U contains an antenna system AS-MS-2 and is connected via a second transmission channel RL-2 between the antenna system AS-MS-2 and the massive MIMO antenna system MMAA to the radio access network node BS. Similarly further mobile stations up to a U-th mobile station MS-U which contains an antenna system AS-MS-U may be each connected via one of further transmission channels including a U-th transmission channel RL-U between one of further antenna systems including the antenna system AS-MS-U and the massive MIMO antenna system MMAA to the radio access network node BS.

The transmission channels RL-1, RL-2, ..., RL-U may be preferably provided in downlink direction by beamforming and pre-coding of downlink radio frequency signals at the radio access network node BS. The antenna systems AS-MS-1, AS-MS-2, ..., AS-MS-U may be usually single antenna systems. According to an alternative embodiment, the antenna systems AS-MS-1, AS-MS-2, .., AS-MS-U of the mobile stations MS-1, MS-2, .., MS-U may be multi-antenna element antenna systems which contain for example two or four antenna elements.

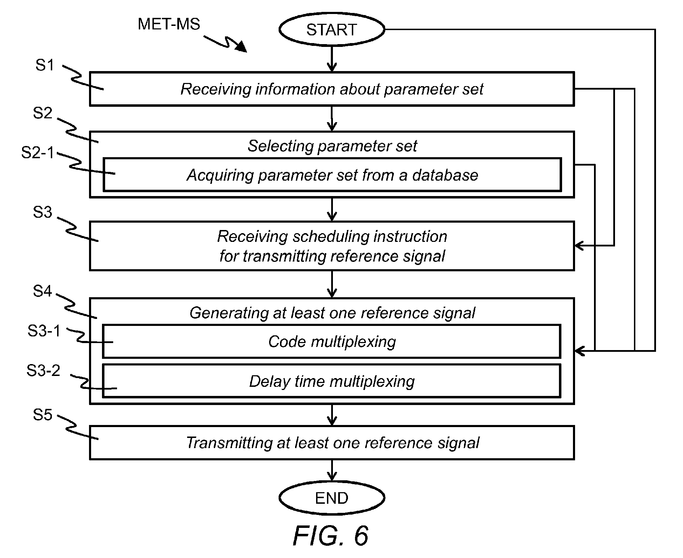

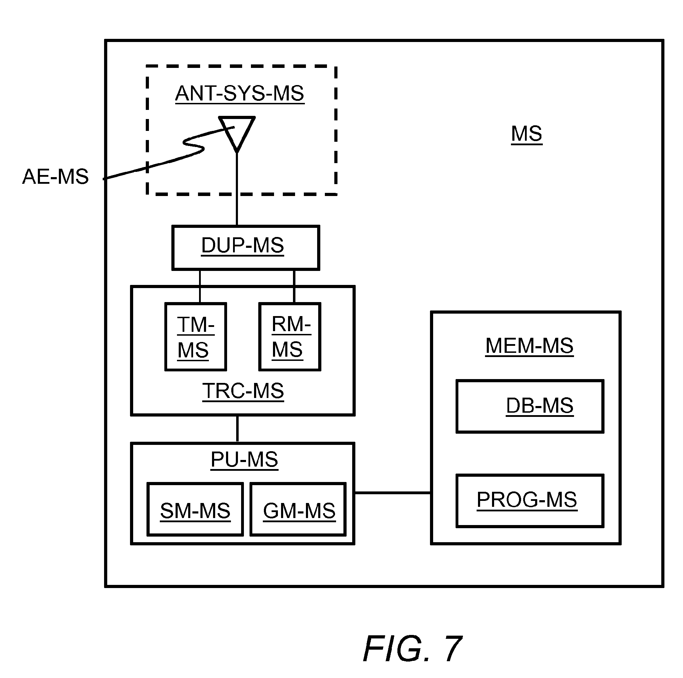

The massive MIMO communication system MMCS is adapted to coordinate a transmission of reference signals RS-1, RS-2, ..., RS-U from the mobile stations MS-1, MS-2, ..., MS-U to the radio access network node BS which is described in the following with respect to Figure 3 to Figure 5 on a more general level. More detailed information about the coordination of the transmission of the reference signals RS-1, RS-2, ..., RS-U from the mobile stations MS-1, MS-2, ..., MS-U to the radio access network node BS is given by a further description with respect to Figures 6 to 9.

The radio access network node BS may be configured to select a first parameter set which contains a first predefined delay time multiplexing parameter and a first predefined coding multiplexing parameter for generating at least one first reference signal RS-1 and for an unequivocal identification of the at least one first reference signal RS-1 when the first mobile station MS-1 transmit the at least one first reference signal RS-1 to the radio access network node BS.

The radio access network node BS may be further configured to select a second parameter set which contains a second predefined delay time multiplexing parameter and a second predefined coding multiplexing parameter for generating at least one second reference signal RS-2 and for an unequivocal identification of the at least one second reference signal RS-2 when the second mobile station MS-2 transmits the at least one second reference signal RS-2 to the radio access network node BS. The radio access network node BS selects the second parameter set in such a way that the second predefined delay time multiplexing parameter may be different to the first predefined delay time multiplexing parameter and the second predefined coding multiplexing parameter may be different to the first predefined coding multiplexing parameter. Alternatively, the radio access network node BS selects the second parameter set in such a way that the second predefined delay time multiplexing parameter may be different to the first predefined delay time multiplexing parameter or the second predefined coding multiplexing parameter may be different to the first predefined coding multiplexing parameter.

The radio access network node BS may be further configured to select further parameter sets up to a U-th parameter set which each contain a further predefined delay time multiplexing parameter and a further predefined coding multiplexing parameter for generating at least one further reference signal up to at least one U-th reference signal RS-U and for an unequivocal identification of the at least one further reference signal including the at least one U-th reference signal RS-U when the further mobile stations up to the U-th mobile station MS-U transmit the at least one further reference signal including the at least one U-th reference signal RS-U to the radio access network node BS. The radio access network node BS selects the further parameter sets including the U-th parameter set in such a way that the further predefined delay time multiplexing parameter may be different to the first predefined delay time multiplexing parameter and the second predefined delay time multiplexing parameter and the further predefined coding multiplexing parameter may be different to the first predefined coding multiplexing parameter and the second predefined coding multiplexing parameter. Alternatively, the radio access network node BS selects the further parameter sets in such a way that the further predefined delay time multiplexing parameter may be different to the first predefined delay time multiplexing parameter and the second predefined delay time multiplexing parameter or the further predefined coding multiplexing parameter may be different to the first predefined coding multiplexing parameter and the second predefined coding multiplexing parameter.

In general, the radio access network node BS is configured to select parameter sets for the mobile stations MS-1, MS-2, ..., MS-U in such a way that each parameter set is a unique parameter set which contains at least one parameter (e.g. predefined delay time multiplexing parameter or predefined coding multiplexing parameter) which is different to a parameter of all other selected parameter sets.

The term "reference signal" may be considered synonymous to and/or referred to as a reference symbol, CSI-reference symbol (CSI = Channel State Information), pilot, pilot signal, pilot symbol, beacon, beacon signal etc.

The radio access network node BS may be further configured to transmit first information INFO-1 about the first parameter set via the communication link CL, the massive MIMO antenna system MMAA and the first transmission channel RL-1 to the first mobile station MS-1.

In a same way, the radio access network node BS may be further configured to transmit second information INFO-2 about the second parameter set via the communication link CL, the massive MIMO antenna system MMAA and the second transmission channel RL-2 to the second mobile station MS-2. Similarly, the radio access network node BS may be further configured to transmit further information up to U-th information about the further parameter sets including the U-th parameter set via the communication link CL, the massive MIMO antenna system MMAA and further transmission channels including the U-th transmission channel RL-U to the further mobile stations including the U-th mobile station MS-U.

The first mobile station MS-1 may be configured to receive the first information INFO-1 about the first parameter set. In a same way, the second mobile station MS-2 may be configured to receive the second information INFO-2 about the second parameter set. Similarly, each of the further mobile stations including the U-th mobile station MS-U may be configured to receive a corresponding one of the further information about the further parameter sets including the U-th information INFO-U about the U-th parameter set.

The mobile stations MS-1, MS-2, ..., MS-U are configured to generate the reference signals RS-1, RS-2, .., RS-U and to transmit the reference signals RS-1, RS-2, ..., RS-U to the radio access network node BS. In one embodiment, the mobile stations MS-1, MS-2, ..., MS-U may have a pre-configuration how to generate the reference signals RS-1, RS-2, ..., RS-U in a unique way by applying the predefined delay time multiplexing parameter and the predefined multiplexing code. In a further embodiment, when such a pre-configuration is not available, the mobile stations MS-1, MS-2, ..., MS-U may generate the reference signals RS-1, RS-2, ..., RS-U as instructed by a corresponding one of the first information INFO-1, the second information INFO-2 or the further information including the U-th information INFO-U.

The radio access network node BS is further configured to receive from several or each of the mobile stations MS-1, MS-2, ..., MS-U preferably at a same time one or several corresponding reference signals RS-1, RS-2, .., RS-U which have been generated based on the predefined delay time multiplexing parameter and the predefined multiplexing code for an unequivocal identification of the reference signals RS-1, RS-2, ..., RS-U.

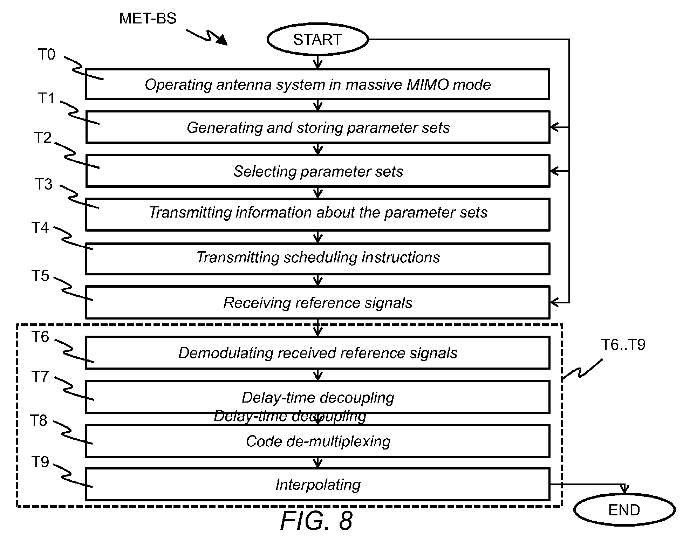

The radio access network node BS is further configured to demodulate the received reference signals RS-1, RS-2, ..., RS-U for obtaining one or several channel impulse responses of the transmission channels RL-1, RL-2, ..., RL-U from the mobile stations MS, MS-1, MS-2, ..., MS-U to radio access network node BS. More details regarding the demodulation are given in the following description with respect to Figure 8.

The radio access network node BS is further configured to delay-time decouple the one or several channel impulse responses based on the corresponding predefined delay time multiplexing parameters for obtaining one or several filtered channel impulse responses. More details regarding the delay-time decoupling are also given in the following description with respect to Figure 8.

The radio access network node BS is further configured to code de-multiplex the one or several filtered channel impulse responses based on corresponding predefined de-multiplexing codes for obtaining one or several de-multiplexed channel impulse responses. More details regarding the delay-time decoupling are also given in the following description with respect to Figure 8.

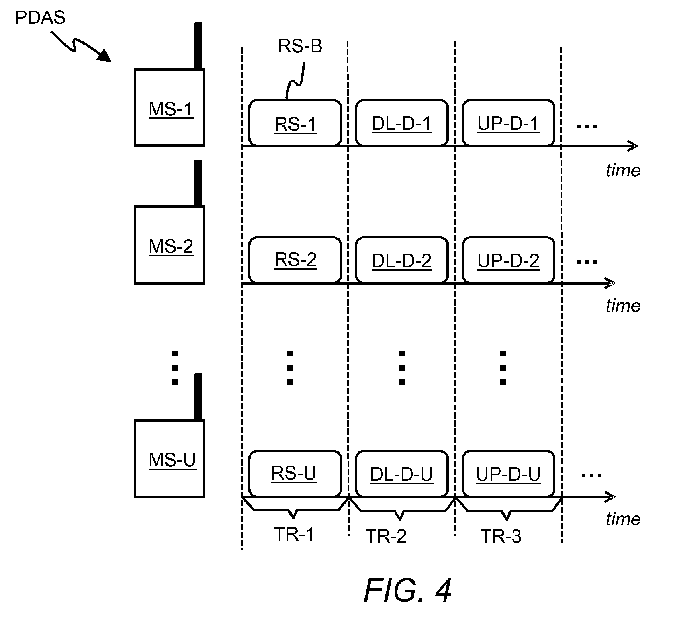

Figure 4 shows an exemplarily pilot and data allocation scheme PDAS for transmitting reference signals RS-1, RS-2, ..., RS-U and uplink data from the mobile stations MS-1, MS-2, ..., MS-U to the radio access network node BS and for transmitting downlink data from the radio access network BS to the mobile stations MS-1, MS-2, ..., MS-U.

The first mobile station MS-1 is further configured to transmit at least one first reference signal RS-1 during a first time range TR-1 (see Figure 4) via the antenna system AS-MS-1 and the first transmission channel RL-1 to the massive MIMO antenna system MMAA by allocating the at least one first reference signal RS-1 for example to a single OFDM symbol of a pilot radio resource block RS-B which is dedicated for reference signal transmission. The predefined delay time multiplexing parameter of the first parameter set may be selected in such a way that the at least one first reference signal RS-1 fully fits to a time position of the pilot radio resource block RS-B. The pilot radio resource block RS-B may be preferably allocated to all frequency subcarriers f1, f2, ...,fU, fU+1, fU+2, ..., fN of a predefined frequency band FB such as shown in Figure 2. The predefined frequency band FB may be for example a frequency band having a channel bandwidth of 1.4 MHz, 3 MHz, 5 MHz, 10 MHz, 15 MHz or 20 MHz or a transmission bandwidth of 6 MHz, 15 MHz, 25 MHz, 50 MHz, 75 MHz or 100 MHz such as applied in LTE.

In a same way, the second mobile station MS-2 is further configured to transmit at least one second reference signal RS-2 during the first time range TR-1 via the antenna system AS-MS-2 and the second transmission channel RL-2 to the massive MIMO antenna system MMAA by allocating the at least one second reference signal RS-2 also to the radio resource block RS-B.

Similarly, the further mobile stations including the U-th mobile station MS-U are further configured to transmit at least one further reference signal including the at least one U-th during the first time range TR-1 via further antenna systems including the antenna system AS-MS-U and the further transmission channels including the U-th transmission channel RL-U to the massive MIMO antenna system MMAA by allocating the at least one further reference signal RS-U also to the radio resource block RS-B. In the example embodiment as shown in Figure 4 in a second time range TR-2, the radio access network node BS may schedule a first downlink radio resource block DL-D-1 for a transmission of first downlink data to the first mobile station MS-1 using for example a PRB (PRB = Physical Resource Block) as applied in LTE which encompasses 12 adjacent frequency subcarriers with a frequency spacing of 15 kHz in a first section of the frequency band FB such as shown in Figure 2 a) or Figure 2 b). In a same way, the radio access network node BS may schedule a second downlink radio resource block DL-D-2 for a transmission of second downlink data to the second mobile station MS-2 using for example a further PRB which encompasses further 12 adjacent frequency subcarriers in a second section of the frequency band FB. Similarly, the radio access network node BS may schedule further downlink radio resource blocks up to a U-th downlink radio resource block DL-D-U for a transmission of further downlink data to the further mobile stations including the U-th mobile station MS-U using even further PRBs which each may encompass even further 12 adjacent frequency subcarriers in further sections of the frequency band FB. The downlink radio resource blocks DL-D-1, DL-D-2, ..., DL-D-U may be separated from the pilot radio resource block RS-B by a predefined guard time which is indicated in Figure 4.

In a third time range TR-3, the radio access network node BS may schedule a first uplink radio resource block UL-D-1 for a transmission of first uplink data from the first mobile station MS-1 using for example a PRB such as applied in LTE in a further first section of the frequency band FB such as shown in Figure 2 a) or Figure 2 b). In a same way, the radio access network node BS may schedule a second uplink radio resource block UL-D-2 for a transmission of second uplink data from the second mobile station MS-2 using for example a further PRB in a further second section of the frequency band FB. Similarly, the radio access network node BS may schedule further downlink radio resource blocks up to a U-th downlink radio resource block DL-D-U for a transmission of further uplink data from the further mobile stations including the U-th mobile station MS-U using even further PRBs in even further sections of the frequency band FB. The uplink radio resource blocks UL-D-1, UL-D-2, ..., UL-D-U may be separated from the downlink radio resource blocks DL-D-1, DL-D-2, ..., DL-D-U by a further predefined guard time which is indicated in Figure 4.

The time ranges TR-1, TR-2, TR-3 etc. may be for example sub-frames of a time length of 1 ms such as applied in LTE (LTE = Long Term Evolution) which consist of two equally sized slots of a time length of 0.5 ms.

The massive MIMO antenna system MMAA provides at least one received first reference signal RS-1a, at least one received second reference signal RS-2a and at least one received further reference signal including at least one received U-th reference signal RS-Ua via the communication link CL to the radio access network node BS. The at least one first reference signal RS-1 is the reference signal as transmitted by the antenna system AS-MS-1 and corresponds to the at least one received first reference signal RS-1a as received by the massive MIMO antenna system MMAA. In same way, the at least one second reference signal RS-2 is the reference signal as transmitted by the antenna system AS-MS-2 and corresponds to the at least one received second reference signal RS-2a as received by the massive MIMO antenna system MMAA and the at least one further reference signal including the at least one U-th reference signal RS-U is the reference signal as transmitted by the further antenna systems including the antenna system AS-MS-U and corresponds to the at least one received further reference signal including the at least one received U-th reference signal RS-Ua as received by the massive MIMO antenna system MMAA.

The radio access network node BS is further configured to obtain from the massive MIMO antenna system MMAA the at least one received first reference signal RS-1a, the at least one received second reference signal RS-2a, and the at least one received further reference signal including the least one received U-th reference signal RS-Ua.

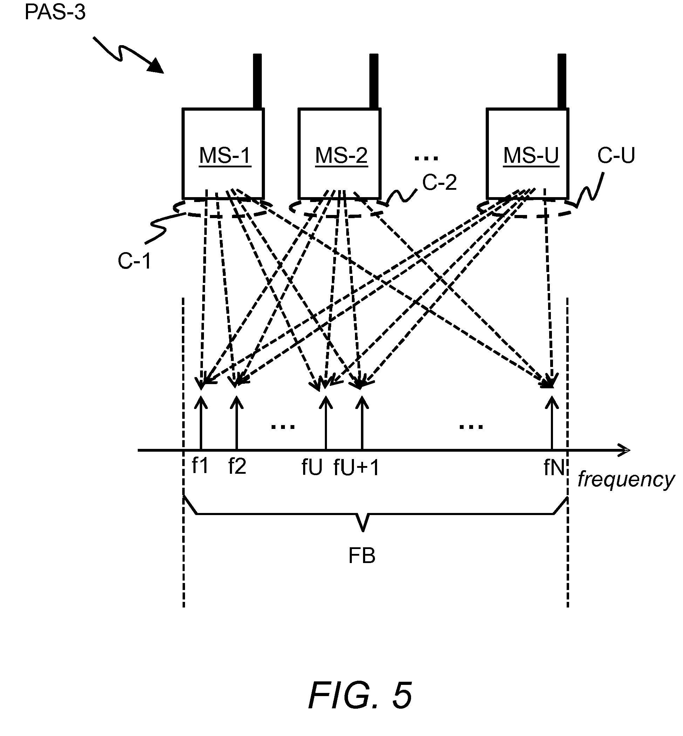

Figure 5 shows schematically how the pilot signals of the mobile stations MS-1, ..., MS-U are uniquely marked by a coding based on predefined multiplexing codes in addition to a time shift based on predefined delay time multiplexing parameters. The pilot signals are spread in a CDMA fashion with dedicated codes or with dedicated orthogonal sequences across the number N of frequency subcarriers f1, f2, ..., fU, fU+1, ..., FN of the predefined frequency band FB. During a predefined time range for transmitting pilot signals, all mobile stations MS-1, ..., MS-U are allowed to transmit coded pilot signals via all of the frequency subcarriers f1, f2, ..., fU, fU+1, ..., FN. The first mobile station MS-1 may be allocated a first code C-1 for spreading a predefined pilot signal across all the frequency subcarriers f1, f2, ..., fU, fU+1, ..., FN. In a same way, the second mobile station MS-2 may be allocated a second code C-2 for spreading the predefined pilot signal across all the frequency subcarriers f1, f2, ..., fU, fU+1, ..., FN. All further mobile stations up to the U-th mobile station MS-U may be allocated further codes up to a u-th code C-U for spreading the predefined pilot signal across all the frequency subcarriers f1, f2, ..., fU, fU+1, ..., FN. Such an allocation and frequency spreading of pilot signals to frequency subcarriers is a so-called pilot multiplexing in the code domain and allows a complete frequency overlapping of the pilot signals that are transmitted in a single time range for pilot signal transmission and allows a separation of the pilot signals of the mobile stations MS-1, MS-2, ..., MS-U after a code de-multiplexing at the base station.

Figure 6 shows schematically a flow diagram of a method MET-MS for transmitting at least one of the reference signals RS-1, RS-2, ...m RS-U by one of the mobile stations MS-1, MS-2, ..., MS-U. The method MET-MS may be executed by each one of the mobile stations MS-1, MS-2, ..., MS-U as shown in Figure 3. Alternatively, the method MET-MS may be only executed by several of the mobile stations MS-1, MS-2, ..., MS-U which are configured with the technical features as described in this specification.

In a first optional step S1, the mobile station MS-1, MS-2, ..., MS-U receives the information INFO-1, INFO-2, ..., INFO-U about the predefined delay time multiplexing parameter and the predefined multiplexing code. In one alternative, values of the predefined delay time multiplexing parameter and the predefined multiplexing code may be directly received. In a further alternative, a first indicator for the predefined delay time multiplexing parameter and a second indicator for the predefined multiplexing code may be received. In an even further alternative, an indicator for a parameter set which incorporates the predefined delay time multiplexing parameter and the predefined multiplexing code may be received. The first indicator, the second indicator or the indicator may be for example based on a byte which contains 8 bits for being able to indicate one of 256 different predefined delay time multiplexing parameters, predefined multiplexing codes or parameter sets.

The information INFO-1, INFO-2, ..., INFO-U may be only transmitted to those mobile stations MS-1, MS-2, ..., MS-U for which a sufficient multiplexing gain can be obtained. The base station BS may select for example only those mobile stations which have reported SINR values (SINR = Signal to Interference-plus-Noise Ratio) above a predefined threshold or for which SINR values have been determined based on uplink transmission which are above the predefined threshold. Generally such SINR values may belong to mobile stations which are located close to the base station BS or close to the massive MIMO antenna system MMAA.

A next step after the step S1, may be step S2, step S3 or step S4 which may depend on the information received by step S1 and/or a configuration of the mobile station MS-1, MS-2, ..., MS-U.

In a further optional step S2 when the indicator for the parameter set has been received or the indicators for the predefined delay time multiplexing parameter and the predefined multiplexing code have been received, the parameter set may be selected based on the received indicator or the received first indicator and the received second indicator. In such a case, the method MET-MS may further contain a sub-step S2-1 of acquiring the parameter set from a database which is stored at the mobile station MS-1, MS-2, ..., MS-U. The database may contain a mapping for two or more indicators INFO-1, INFO-2, ..., INFO-U and two or more parameter sets as shown in following exemplarily table 1:

Table 1

| Indicator | Parameter Set Nr. | Predefined multiplexing codes/Predefined sets of coding multiplexing parameters | Predefined Delay time multiplexing parameter |
|---|---|---|---|
| INFO-1 | 1 | $C_1(f_1)$, $C_1(f_2)$,..., $C_1(f_U)$, $C_1(f_{U+1})$,..., $C_1(f_N)$ | $\theta_1$ |
| IN FO-2 | 2 | $C_2(f_1)$, $C_2(f_2)$,..., $C_2(f_U)$, $C_2(f_{U+1})$,..., $C_2(f_N)$ | $\theta_2$ |
| ... | ... | ... | ... |
| INFO-U | U | $C_U(f_1)$, $C_U(f_2)$,..., $C_U(f_U)$, $C_U(f_{U+1})$,..., $C_U(f_N)$ | $\theta_U$ |
| ... | ... | ... | ... |
| INFO-100 | 100 | $C_{100}(f_1)$, $C_{100}(f_2)$,..., $C_{100}(f_U)$, $C_{100}(f_{U+1})$,..., $C_{100}(f_N)$ | $\theta_{100}$ |

The table 1 contains as an example 100 different parameter sets for 100 different indicators. Alternatively, the database may contain 50, 200 or even more entries. The number of entries may be adapted to a maximum number of mobile stations MS1, MS2, ..., MS-U that can be served simultaneously within the radio cell RC.

The third column of the table 1 contains sets of coding multiplexing parameters for each indicator INFO-1, INFO-2, ..., INFO-U, ..., INFO-100. The sets of coding multiplexing parameters may be defined for example in a following way:

$$\boldsymbol{C_i} = [C_i(f_1), C_i(f_2), \dots, C_i(f_U), C_i(f_{U+1}), \dots, C_i(f_N)] \qquad (1)$$

with:

$\boldsymbol{C_i}$: code vector with index $i$,

$i$: index from 1 to 100,

$C_i(f_n)$: vector element for frequency subcarrier $f_n$ with index $n$ and for vector $\boldsymbol{C_i}$ with index $\boldsymbol{i}$.

N: number of frequency subcarriers of the frequency range FB (see Figure 2 a) or Figure 2 b)).

The frequency subcarriers $f_n$ are the frequency subcarriers f1, f2, ..., fU, fU+1, ..., fN as shown for example in Figure 2 a) or Figure 2 b). Preferably, a number of the vector elements $C_i(f_n)$ of the code vector $\boldsymbol{C_i}$ is identical to the number of frequency subcarriers of the frequency range FB as shown above in equation (1). In a further embodiment, the number of the vector elements $C_i(f_n)$ of the code vector $\boldsymbol{C_i}$ may be larger than the number of frequency subcarriers of the frequency range FB.

The vector elements $C_i(f_n)$ of each one of the code vectors $\boldsymbol{C_i}$ may be for example elements of a random sequence of integers or rational numbers. Each of the code vectors $\boldsymbol{C_i}$ may preferably contain a unique series of vector elements $C_i(f_n)$ which means that the code vectors $\boldsymbol{C_i}$ differ in at least one of the vector elements $C_i(f_n)$.

Preferably, the vector elements $C_i(f_n)$ of the code vector $\boldsymbol{C_i}$ may be defined in such a way that relation $L \cdot U \le size\{C_1(f_n)\} \cdot N'$ is fulfilled with $L$ being the minimum number of estimated nonoverlapping frequency subcarriers per mobile station MS-1, MS-2, ..., MS-U which are required to estimate all channel paths between one of the mobile stations MS-1, MS-2, ... MS-U and the radio access network node BS, U being the number of mobile stations MS-1, MS-2, ... MS-U, *size*{...} being a mathematical function to determine an overall number of vector elements $C_i(f_n)$ which means an overall number of codes and $N'$ may be equal to the number $N$ of subcarriers of the predefined frequency band FB or maybe a predefined number of IFFT/FFT sampling points (IFFT = Inverse Fast Fourier Transformation, FFT = Fast Fourier Transformation). The vector element $C_i(f_n)$ maybe also regarded as a multiplexing order.

In an exemplarily embodiment, for the number $N$ = 1204 of frequency subcarriers (also the sample size of inverse fast Fourier transform) of the frequency range FB, the number $U$ = 40 of mobile stations MS-1, MS-2, ..., MS-U and, the number $L$=32 of estimated non-overlapping delay-time domain samples or simply time domain signal samples per mobile station MS-1, MS-2, ..., MS-U an interference-free multiplexing order $\theta$ = 32 in delay time domain is available. In such a case a number $U - \theta$ = 8 of pilot signals have to be multiplexed. In practical radio communication systems the number $L$ of the estimated non-overlapping delay-time domain samples or simply time domain signal samples per mobile station is not known a priori and may be estimated either based on experiments known to skilled persons in the art or it may be calculated by following equation:

$$L = N/G \qquad (2)$$

with

G being a guard time interval length which may be expressed by a number of samples of the guard time interval,
$\boldsymbol{N}$: being also the number of FFT/IFFT sampling points (i.e. $\boldsymbol{N}$ is a number of samples of an effective OFDM symbol (i.e. total OFDM symbol duration is N+G samples) of $X$ seconds duration).

The fourth column of the table 1 contains a delay time multiplexing parameter $\theta_i$ for each indicator INFO-1, INFO-2, ..., INFO-U, ..., INFO-100. The delay multiplexing parameters $\theta_i$ may be defined for example in a following way:

$$\theta_i = k \qquad (3)$$

with:

k: an integer selected from a series of integers 0, 1, 2, 3, ..., N and with N being the number of frequency subcarriers of the frequency range FB.

The sets of coding multiplexing parameters and the delay time multiplexing parameter are allocated to the parameter sets in such a way, that each of the parameter sets is unique. This means that every two parameter sets selected from the table 1 differ at least either in the set of coding multiplexing parameters or in the delay time multiplexing parameter. In an alternative embodiment, every two parameter sets selected from the table 1 differ in the set of coding multiplexing parameters and in the delay time multiplexing parameter.

Instead of using a database for the parameter sets at each of the mobile stations MS-1, MS-2, ..., MS-U each of the mobile stations MS-1, MS-2, ..., MS-U may be configured with a number **N** of equations to calculate the vector elements $C_i(f_n)$ as output parameters and a further equation to calculate the delay multiplexing parameters $\theta_i$. In such a case, a corresponding one of the information INFO-1, INFO-2, ..., INFO-U may be used as an input parameter for each of the number **N** of equations and for the further equation.

The parameter sets are applied for an unequivocal identification of the reference signals RS-1, RS-2, ..., RS-U when the mobile stations MS-1, MS-2, ..., MS-U transmit the reference signals RS-1, RS-2, ..., RS-U to the radio access network node BS.

According to an alternative embodiment, a further table instead of the table 1 may contain a mapping for two or more of the first indicators and two or more predefined delay time multiplexing parameter and an even further table may contain a mapping for two or more of the second indicators and two or more predefined multiplexing codes.

A next step after the step S2, may be step S3 when the mobile station MS-1, MS-2, ..., MS-U is only allowed to transmit the reference signals RS-1, RS-2, ..., RS-U during dedicated time periods or step S4 when there is no such restriction to dedicated time periods.

In the next optional step S3, a scheduling instruction INS-1, INS-2, ..., INS-U may be received from the radio access network node BS which may instruct the mobile station MS-1, MS-2, ..., MS-U when to transmit the at least one reference signal RS-1, RS-2, ..., RS-U. The step S3 may be executed for example, when there are no well-defined and dedicated (periodical) time slots for transmitting the at least one reference signal RS-1, RS-2, ..., RS-U. The scheduling instruction INS-1, INS-2, ..., INS-U may contain for example an indicator for a specific sub-frame number which shall be used for transmitting the at least one reference signal RS-1, RS-2, ..., RS-U during the predefined time range TR-1 (see Figure 5).

Further step S4 may be executed without receiving the information INFO-1, INFO-2, ..., INFO-U and without receiving the scheduling instruction INS-1, INS-2, ..., INS-U for example when the mobile station MS-1, MS-2, ..., MS-U is pre-configured by storing the predefined delay time multiplexing parameter and the predefined multiplexing code for example on a SIM card (SIM = Subscriber Identity Module) or in an internal memory unit of the mobile station MS-1, MS-2, ..., MS-U.

By the further step S4, the at least one reference signal RS-1, RS-2, ..., RS-U is generated based on the predefined delay time multiplexing parameter and the predefined multiplexing code by performing an IFFT (IFFT = Inverse Fast Fourier Transformation) known to skilled persons in the art for getting a time-domain signal which is going to be transmitted during a specific pilot radio resource block RS-B (see Figure 4) and by appending a cyclic prefix known to skilled persons in the art to an OFDM symbol which contains the at least one reference signal RS-1, RS-2, ..., RS-U. The step S4 may be divided in a sub-step S4-1 of code multiplexing a predefined reference signal based on the predefined multiplexing code and a further sub-step S4-2 of delay time multiplexing based on the predefined delay time multiplexing parameter.

The code multiplexing of the predefined reference signal $P(f_n)$ for frequency subcarrier $f_n$ may be done for example by performing a mathematical operation according to following equation:

$$P_i'(f_n) = P(f_n)C_i(f_n) \qquad (4)$$

with

$P_i'(f_n)$: code multiplexed reference signal for frequency subcarrier $f_n$,

$P(f_n)$: predefined reference signal for frequency subcarrier $f_n$.

The predefined reference signal for the frequency subcarrier $f_n$ may be for example a common pilot signal or a dedicated pilot signal such as defined in LTE standard Release 8 3GPP TS 36.211 V8.5.0 (2008-12).
The code multiplexing may be similar to a spreading code as applied in UMTS and a principle of such a code multiplexing is described in more detail with respect to Figure 5.

The delay time multiplexing of the code multiplexed reference signal $P'_i\left(f_n\right)$ for frequency subcarrier $f_n$ may be done for example by performing a mathematical operation according to following equation:

$$P_i(f_n) = P'_i(f_n)\exp\left(-j2\pi\theta_i\frac{n}{N}\right) \qquad (5)$$

with
$P_i(f_n)$: code multiplexed and delay time multiplexed reference signal for frequency subcarrier $f_n$.
More details for about the principle of delay time multiplexing is given for example by equations (7) to (15) in the following technical paper: H. Gacanin et. al., "On Channel Estimation for Analog Network Coding in a frequency-Selective Fading Channel", EURASIP Journal on Wireless Communications and Networking, Volume 2011, Article ID 980430.
According to a further alternative, an order of the code multiplexing and the delay time multiplexing may be exchanged and the predefined reference signal may be delay time multiplexed in a first sub-step and then code multiplexed in a second sub-step.
A reference signal RS-1, RS-2, ..., RS-U based on a combination of the code multiplexing and the delay time multiplexing (see equation (2) and equation (3)) and transmitted by the mobile station MS-1, MS-2, .., MS-U for the frequency subcarrier $f_n$ may be given by following equation:

$$P_i(n) = P(n)C_i(f_n)\exp\left(-j2\pi\theta_i\frac{n}{N}\right) \qquad (6)$$

In a further step S5, the code multiplexed and delay time multiplexed at least one reference signal RS-1, RS-2, ..., RS-U as generated by the previous step S3 is allocated to the pilot radio resource block RS-B (see Figure 4) and is transmitted as the at least one reference signal RS-1, RS-2, ..., RS-U to the radio access network node BS.
Figure 6 shows schematically a block diagram of a mobile station MS. The mobile station MS may be one of the mobile stations MS-1, MS-2, ..., MS-U as shown in Figure 3. The mobile station MS is shown in Figure 6 only with those components und units which are relevant for generating and transmitting the at least one reference signal RS-1, RS-2, ..., RS-U.
The mobile station MS contains an antenna system ANT-SYS-MS. The antenna system ANT-SYS-MS contains a single antenna element AE-MS. Alternatively the antenna system ANT-SYS-MS may contain two antenna elements for more than two antenna elements such as four antenna elements.
The mobile station MS further contains a duplexer unit DUP-MS which is connected to the antenna system ANT-SYS-MS. The duplexer unit DUP-MS is configured to separate radio frequency signals to be transmitted via the antenna system ANT-SYS-MS from further radio frequency signals being received by the antenna system ANT-SYS-MS. According to a further alternative embodiment, the antenna system ANT-SYS-MS may contain a first antenna element for transmitting the radio frequency signals and a second antenna element for receiving the further radio frequency signals. In such a case the duplexer unit DUP-MS is not required.
The mobile station MS further contains a transceiver unit TRC-MS which contains a receiver module RC-MS and a transmitter module TM-MS. Both, the receiver module RC-MS and the transmitter module TM-MS are connected to the duplexer unit DUP-MS. The receiver module RC-MS is configured to receive the information INFO-1, INFO-2, ..., INFO-U about the predefined delay time multiplexing parameter and the predefined multiplexing code to be applied for generating the at least one reference signal RS-1, RS-2, ..., RS-U. The transmitter module TR-MS is configured to transmit the at least one reference signal RS-1, RS-2, ..., RS-U to the radio access network node BS.
The mobile station MS further contains a processing unit PU-MS which is connected to the transceiver unit TRC-MS and which is configured to execute the steps of the method MET-MS. Alternatively, the mobile station MS contains more than one processing unit for executing the steps of the method MET-MS. The processing unit PU-MS may contain a first sub-unit GM-MS which is configured to generate the code multiplexed and delay time multiplexed at least one reference signal RS-1, RS-2, .., RS-U by applying for example equation (4). The processing unit PU-MS may further contain a second sub-unit SM-MS which is configured to select the parameter set based on the indicator INFO-1, INFO-2, ..., INFO-U.

The mobile station MS further contains a memory module MEM-MS which is connected to the processing unit PU-MS. The memory module MEM-MS is configured to store a computer program PROG-MS for operating the processer unit PU-MS by executing the steps of the method MET-MS. The memory module MEM-MS may be further configured to store a database DB-MS based for example on table 1 for a mapping between indicators INFO-1, INFO-2, .. , INFO-U and the parameter sets for generating the code multiplexed and delay time multiplexed at least one reference signal RS-1, RS-2, ..., RS-U as described above.

Figure 8 shows schematically a flow diagram of a method MET-BS for the radio access network node BS as shown in Figure 3. The method MET-BS may start by one of steps T0, T1, T2 or T5 which depends on a configuration of the radio access network node BS and/or the mobile stations MS-1, MS-2, ..., MS-U.

In a first preferred but optional step T0, the antenna system MMAA may be operated in a massive MIMO operation mode for serving the mobile stations MS-1, MS-2, ..., MS-U. This means as described above that a very large number of antenna elements AE1, ... AE-M of the antenna system MMAA (e.g., hundreds or thousands) are operated fully coherently and adaptively. The step T0 may be not required if the antenna system MMAA only contains a low number of antenna elements AE-1, ..., AE-M such as 4, 8 or 16.

In a further optional step T1, the parameter sets such as shown and described above with respect to table 1 may be generated. For a first parameter set, a first predefined multiplexing code $C_1$ may be generated for example based on a random sequence of integers or rational numbers by calculating a random number for each frequency subcarrier $f_n$ of the frequency range FB. An example range of the integers or rational numbers may be for example between -10 and 10. A first predefined delay multiplexing parameter $\theta_1$ may be calculated randomly from the series of integers 0, 1, 2, 3, ..., $N$. In a same way, a second parameter set containing a second predefined multiplexing code $C_2$ and a second predefined delay multiplexing parameter $\theta_2$ is generated but after the generation it is verified whether at least one parameter differs from the parameters of the first parameter set. If all parameter are the same, one or several parameters are repeatedly recalculated until at least one parameter differs from the parameters of the first parameter set. Similarly, further parameter sets are generated.

The generated parameter sets are stored in a database of the radio access network node BS or in a central database of the massive MIMO communication system MMCS.

The step T1 may be not required if the radio access network node BS or the central database is already equipped with a database which contains the parameter sets.

By a further step T2, the first parameter set which contains the first predefined delay time multiplexing parameter $\theta_1$ and the first predefined multiplexing code $C_1$ is selected for example from the database for an unequivocal identification of the at least one first reference signal RS-1 which will be transmitted by the first mobile station MS-1. In a same way the second parameter set which contains the second predefined delay time multiplexing parameter $\theta_2$ and the second predefined multiplexing code $C_2$ is selected for example from the database for an unequivocal identification of the at least one second reference signal RS-2 which will be transmitted by the second mobile station MS-2. Similarly, the further parameter sets up to the U-th parameter set are selected for example from the database.

In a next step T3, the information INFO-1, INFO-2, ..., INFO-U about the first parameter set, the second parameter set and the further parameter sets may be transmitted to the mobile stations MS-1, MS-2, ..., MS-U by applying corresponding indicators. Alternatively, the first indicator for the predefined delay time multiplexing parameter and the second indicator for the predefined multiplexing code may be transmitted to the mobile stations MS-1, MS-2, ..., MS-U.

In a further optional step T4, scheduling instructions INS-1, INS-2, ..., INS-U may be transmitted to the mobile stations MS-1, MS-2, ..., MS-U which may instruct the mobile stations MS-1, MS-2, ..., MS-U when to transmit the reference signals RS-1, RS-2, ..., RS-U towards the radio access network node BS. The step T5 may be executed for example, when there are no well-defined and dedicated (periodical) time slots for transmitting the reference signals RS-1, RS-2, ..., RS-U. The scheduling instruction INS-1, INS-2, ..., INS-U may contain for example an indicator for a subframe number or for a predefined time range or for a predefined signaling interval which shall be used for transmitting the reference signals RS-1, RS-2, ..., RS-U. Using such scheduling instructions INS-1, INS-2, ..., INS-U allows the radio access network node BS to control that the mobile stations MS-1, MS-2, ..., MS-U transmit the reference signals RS-1, RS-2, ..., RS-U at a same time which provides no problem in detecting and measuring the reference signals RS-1, RS-2, ..., RS-U at the radio access network node BS because of unique fingerprints of the reference signals RS-1, RS-2, ..., RS-U which identify the reference signals RS-1, RS-2, ..., RS-U when each of the reference signals RS-1, RS-2, ..., RS-U is generated by applying a different parameter set as described above.

In a next step T5, the reference signals RS-1, RS-2, ..., RS-U are received at the antenna system MMAA and are provide as received reference signals RS-1a, RS-2a, ..., RS-Ua from the antenna system MMAA to the radio access network node BS.

In a further step T6..T9, at least one channel estimate of at least one transmission channel RL-1, RL-2, ..., RL-U from at least one mobile station MS-1, MS-2, ..., MS-U to the radio access network node BS is determined based on the received at least one reference signal RS-1, RS-2, ..., RS-U, based on at least one predefined delay time multiplexing parameter and based on at least one predefined de-multiplexing code which is correlated to said at least one predefined multiplexing code. The determination of the at least one channel estimate may done for example by following steps T6, T7, T8 and T9.

By the step T6, the at least one reference signal RS-1, RS-2, ..., RS-U which has been received from the at least one mobile station MS-1, MS-2, ..., MS-U is demodulated for obtaining at least one channel impulse response of the transmission channel RL-1, RL-2, ..., RL-U from the at least one mobile station MS-1, MS-2, ..., MS-U to the radio access network node BS,

A received signal **R(n)** which is obtained by an N-sample FFT (e.g. a fast Fourier transformation across the number N of FFT sampling points) after having received at one of the antenna elements AE-1, ..., AE-M may be represented by following equation:

$$R(n) = P_1(n)H_1(n) + P_2(n)H_2(n) + \ldots + P_U(n)H_U(n) + W(n) \qquad (7)$$

with:

$P_1(n)$, $P_2(n)$, ..., $P_U(n)$: reference signals RS-1, RS-2, ..., RS-U transmitted by the mobile stations MS-1, MS-2, ..., MS-U as given by equation (6),
$H_1(n)$, $H_2(n)$, ..., $H_U(n)$: channel matrixes of the transmission channels RL-1, RL-2, ...RL-U,
$W(n)$: denotes noise measured by the radio access network node BS on the frequency subcarrier $f_n$.

Inserting the representation of the reference signals RS-1, RS-2, ..., RS-U as given by equation into equation (7) the received signal $R(n)$ can be represented by:

$$R(n) = P_1(n)H_1(n) + P_1(n)H_2(n)C_2(n) \exp\left(-j2\pi\theta_2 \frac{n}{N}\right) + \cdots$$

$$+ P_1(n)H_U(n)C_U(n)\exp\left(-j2\pi\theta_U \frac{n}{N}\right) + W(n) \qquad (8)$$

An initial channel gain estimate $\hat{H}(n)$ at one of the antenna elements AE-1, ..., AE-M may be calculated by performing a reverse modulation or demodulation for example according to following equation:

$$\hat{H}(n) = \frac{R(n)}{P_1(n)} = H_1(n) + H_2(n)C_2(n) \exp\left(-j2\pi\theta_2 \frac{n}{N}\right) + \cdots$$

$$+ H_U(n)C_U(n)\exp\left(-j2\pi\theta_U \frac{n}{N}\right) + \widehat{W}(n) \qquad (9)$$

A time delay representation of an effective CIR (CIR = Channel Impulse Response) $\hat{h}(\tau)$ may be obtained by applying an N-sample IFFT (e.g. an inverse fast Fourier transformation across the number N of IFFT sampling points) to equation (9) and may be represented by following equation:

$$\hat{h}(\tau) = h_1(\tau) + h_2\big((\tau - \theta_2)\mathrm{mod}\, N\big)c_2(\tau) + \cdots$$

$$+ h_U\big((\tau - \theta_U)\mathrm{mod}\, N\big)c_U(\tau) + \widehat{w}(\tau) \qquad (10)$$

with:

$\tau$: delay time,
$h_1$, $h_2$ ... $h_U$: channel impulse responses,
$c_1$, $c_2$ ... $c_U$: predefined de-multiplexing codes.

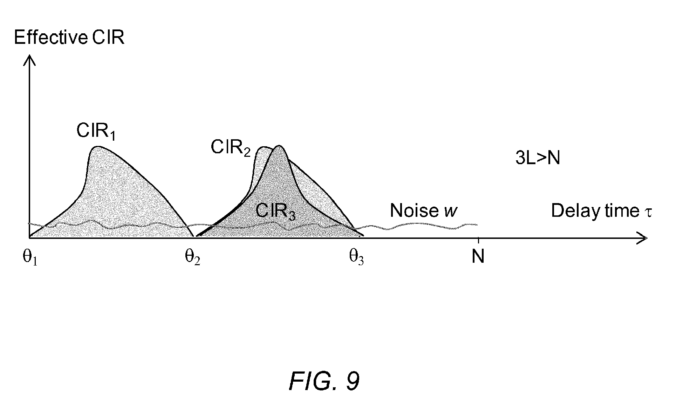

The situation according to equation (10) is graphically illustrated and shown by Figure 9. The effective CIR is shown exemplarily for a first CIR $CIR_1$, a second CIR $CIR_2$ and a third CIR $CIR_3$ of three of the transmission channels RL-1, RL-2, ..., RL-U as a function of the delay time $\tau$ for a condition that three times the minimum number of estimated non-overlapping frequency subcarriers $L$ per mobile station MS-1, MS-2, ..., MS-U is larger than the number $N$ of frequency subcarriers f1, f2, ..., fU, fU+1, ..., FN of the predefined frequency band FB.

By a next step T7, a delay-time decoupling of the effective CIR $\hat{h}(\tau)$ is executed based on the predefined delay time multiplexing parameters $\theta_1$ and $\theta_2$ for obtaining filtered channel impulse responses $\widehat{h_1}(\tau)$ and $\widehat{h_{2..U}}(\tau)$. Preferably, the delay-time decoupling is done by a two-step filtering process which may be represented for example by following equations:

$$\widehat{h_1}(\tau) = \begin{cases} \hat{h}(\tau); \tau < \theta_1 \\ 0; elsewhere \end{cases} \text{ and } \widehat{h_{2..U}}(\tau) = \begin{cases} \hat{h}(\tau); \theta_2 < \tau \\ 0; elsewhere \end{cases} \quad (11)$$

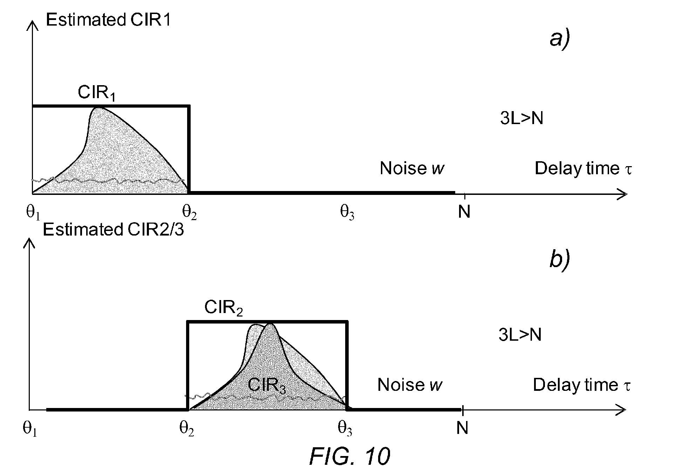

The two filtering functions which are applied to the effective CIR $\hat{h}(\tau)$ both have a rectangular form as shown and illustrated by a thick black line in Figure 10 a) and 10 b).

In a next step T8, the filtered channel impulse responses $\widehat{h_{2..U}}(\tau)$ are code de-multiplexed by applying predefined de-multiplexing codes $c_i^*$ for obtaining de-multiplexed channel impulse responses $\tilde{h}(\tau); i = 2.. U.$ The code de-multiplexing may be executed using for example according to following equation:

$$\tilde{h_i}(\tau) = \widehat{h_{2..U}}(\tau) \cdot c_i^*; i = 2.. U \quad (12)$$

with following conditions for a code orthogonality: $E\left[c_i c_j^*\right] = 0; E\left[c_i c_i^*\right] = 1$ with $i \neq j$.

The predefined de-multiplexing codes $c_i^*$ are correlated with the predefined multiplexing codes $C_i(f_n)$ according to following equations:

$$c_i = IFFT(C_i(f_n)) \text{ and } C_i(f_n) = FFT(c_i) \quad (13)$$

The conjugate operation for obtaining the predefined de-multiplexing codes $c_i^*$ is added after the transformation according to equation (13) is done.

Although a same predefined delay time multiplexing parameters $\theta_2$ is applied for the filtered channel impulse responses $\widehat{h_{2..U}}(\tau)$ and the channel impulse responses $CIR_2$ and $CIR_3$ are overlapping as can be seen in Figure 9 and Figure 10 b) two separate channel impulse responses can be obtained by using a separation in code domain.

In a further step T9, the filtered channel impulse response $\widehat{h_1}(\tau)$ and the code de-multiplexed channel impulse responses $\widehat{h_i}(\tau); i = 2.. U$ are interpolated for obtaining channel estimates such as estimated channel gains for the channel impulse responses $CIR_1$, $CIR_2$, $CIR_3$, ... $CIR_U$ at all frequency subcarriers f1, f2, ..., fU, fU+1, ..., FN. For the interpolation and for obtaining the estimated channel gains an FFT may be applied using for example following equations:

$$H_1^e(n) = FFT\left[\widehat{h_1}(\tau)\right], H_i^e(n) = FFT\left[\widehat{h_i}(\tau - \theta_2)\right]; i = 2.. U; n = 1.. N \quad (14)$$

This processing provides the advantage that only a part of the noise which is captured by the filtering according to the equations (11) will affect the estimates of the channel gains and contributes to an estimator error. Such a processing is different to a pure CDMA processing approach which is not described for simplification and can be easily obtained by each person skilled in the art using the above description.

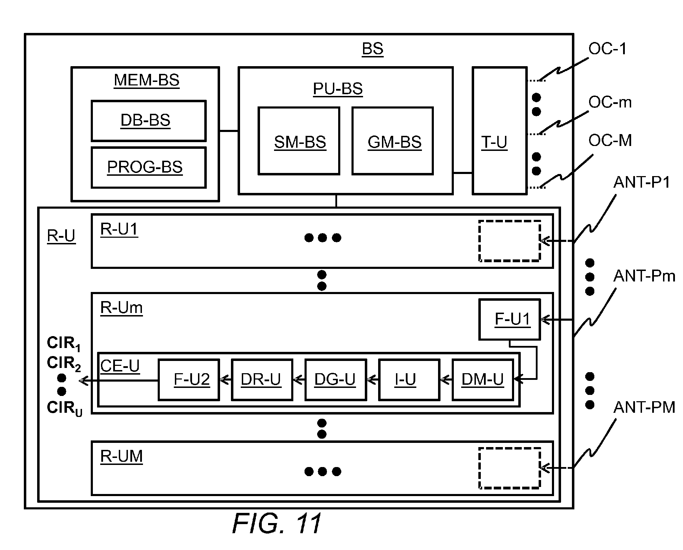

Figure 11 shows exemplarily processing units of the radio access network node BS which executes the method MET-BS. The radio access network node BS contains a number M of antenna ports ANT-P1, ..., ANT-Pm, ..., ANT-PM for connecting the antenna elements AE-1, ..., AE-M of the antenna system MMAA via the communication line CL to the radio access network node BS (see Figure 3).

The radio access network node BS further contains a receiver unit R-U which is configured to receive the reference signals RS-1a, RS-2a, ..., RS-Ua as provided from the antenna system MMAA via the communication line CL to the radio access network node BS. The receiver unit R-U may contain a number M of receiver sub-units R-U1, ..., R-Um, ..., R-UM. Each one of the receiver sub-units R-U1, ..., R-Um, ..., R-UM is connected to one of the antenna ports ANT-P1, ..., ANT-Pm, ..., ANT-PM. For simplification, only sub-components and/or sub-units of receiver sub-unit R-Um are shown in more detail. Further receiver sub-units R-U1, ..., R-Um-1, R-Um+1, ..., R-UM preferably contain the same sub-components and/or sub-units.

The receiver sub-unit R-Um may contain for example a first FFT processing unit F-U1 and a channel estimation unit CE-U. The first FFT processing unit F-U1 is connected to antenna port ANT-Pm and is configured to perform a first FFT to obtain the received signal R(n) at an output of the first FFT processing unit F-U1 for example according to equation (7) as given above.

The channel estimation unit CE-U contains a demodulator unit DM-U, an IFFT processing unit I-U, a decoupling unit DG-U, a decoder unit DR-U and a second FFT processing unit F-U2. The demodulator unit DM-U is connected to the output of the first FFT processing unit F-U1 and is configured to demodulate the received at least one reference signal RS-1, RS-2, ..., RS-U for obtaining the channel impulse response of the at least one transmission channel RL-1, ..., RL-U as the initial channel gain estimate $\hat{H}(n)$ for example according to equation (9) as given above.

The channel estimation unit CE-U further contains the IFFT processing unit I-U which is connected to an output of the demodulator unit DM-U and which is configured to generated the at least one time delay representation of the effective CIR $\hat{h}(\tau)$ for example according to equation (10) as given above.

The channel estimation unit CE-U even further contains the decoupling unit DG-U which is connected to an output of the IFFT processing unit I-U and which is configured to delay-time decouple the channel impulse response based on the predefined delay time multiplexing parameters $\theta_1$ and $\theta_2$ for obtaining the filtered channel impulse responses $\widehat{h_1}(\tau)$ and $\widehat{h_{2..U}}(\tau)$ for example according to equation (11) as given above.

The channel estimation unit CE-U even further contains the decoder unit DR-U which is connected to an output of the decoupling unit DG-U and which is configured to code de-multiplex the filtered channel impulse responses $\widehat{h_1}(\tau)$ and $\widehat{h_{2..U}}(\tau)$ based on the predefined de-multiplexing code for obtaining the de-multiplexed channel impulse response $\tilde{h}(\tau)$ for example according to equation (12) as given above.

The channel estimation unit CE-U even further contains the second FFT processing unit F-U2 which is connected to an output of the decoder unit DR-U and which is configured to interpolate the filtered channel impulse response $\widehat{h_1}(\tau)$ and the code de-multiplexed channel impulse responses $\widehat{h_1}(\tau)$; $i = 2..U$ for obtaining the estimated channel gains for the channel impulse responses $CIR_1$, $CIR_2$, $CIR_3$, ... $CIR_U$ at all frequency subcarriers f1, f2, ..., fU, fU+1, ..., FN for example according to equation (14) as given above.

The radio access network node BS further contains a transmitter unit T-U which is configured to transmit to the mobile stations MS-1, MS-2, ..., MS-U via the antenna system MMAA the information INFO-1, INFO-2, ..., INFO-U about the parameter sets to be applied by the mobile stations MS-1, MS-2, ..., MS-U for generating the reference signals RS-1, RS-2, ..., RS-U. The transmitter module TR-BS may be further optionally configured to transmit the scheduling instructions INS-1, INS-2, ..., INS-U via the antenna system MMAA to the mobile stations MS-1, MS-2, ..., MS-U. Each one of output connections OC-1, ..., OC-m, ... OC-M of the transmitter unit T-U may be connected via duplexer units to a corresponding one of the antenna ports ANT-P1, ..., ANT-Pm, ..., ANT-PM which is not shown for simplification. The duplexer units are used to separate transmit signals coming from the transmitter unit T-U to be provided to a corresponding one of the antenna elements AE-1, ..., AE_M from received signals coming from the corresponding one of the antenna elements AE-1, ..., AE_M and to be provided to the receiver unit R-U.

The duplexer units may be part of the radio access network node BS or may be collocated with the antenna system MMAA.

According to an alternative embodiment, a transceiver unit may contain the transmitter unit T-U and the receiver unit R-U. The radio access network node BS further contains a processing unit PU-BS which is connected to the transmitter unit T-U and to the receiver unit R-U and which is configured to execute the steps of the method MET-BS. Alternatively, the radio access network node BS contains more than one processing unit for executing the steps of the method MET-BS. The processing unit PU-BS may contain a first sub-unit GM-BS which is configured to generate the parameter sets for example as shown in table 1. The processing unit PU-BS may further contain a second sub-unit SM-BS which is configured to select and allocated the parameter sets to the mobile stations MS-1, MS-2, ..., MS-U.

The radio access network node BS further contains a memory module MEM-BS which is connected to the processing unit PU-BS. The memory module MEM-BS is configured to store a computer program PROG-BS for operating the processer unit PU-BS by executing the steps of the method MET-BS. The memory module MEM-BS may be further configured to store a database DB-BS based on table 1 for a mapping between indicators INFO-1, INFO-2, ..., INFO-U and the parameter sets for generating the code multiplexed and delay time multiplexed at least one reference signal RS-1, RS-2, ..., RS-U as described above.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for transmitting", "means for receiving", "means for determining" etc. (performing a certain function) shall be understood as functional blocks comprising circuitry that is adapted for performing a certain function, respectively. Hence, a "means for s.th." may as well be understood as a "means being adapted or configured for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the methods MET-MS, MET-BS disclosed in the specification or in the claims may be implemented by a device having means for performing each of the respective steps of these methods. Preferably, a computer program product may contain computer-executable instructions for performing one of the methods MET-MS, MET-BS, when the computer program product is executed on at least one programmable hardware device such as a DSP, an ASIC or an FPGA. Preferably, a digital data storage device may encode a machine-executable program of instructions to perform one of the methods MET-MS, MET-BS.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1.  A method (MET-MS) for a first network node (MS, MS-1, MS-2, ..., MS-U) of a radio communication system (MMCS) comprising:

    - generating (S3) at least one reference signal (RS-1, RS-2, ..., RS-U) based on a predefined delay time multiplexing parameter and a predefined multiplexing code for an unequivocal identification of said at least one reference signal (RS-1, RS-2, ..., RS-U), and
    - transmitting (S4) said at least one reference signal (RS-1, RS-2, ..., RS-U) to said second network node (BS).

2.  Method (MET-MS) according to claim 1, wherein said generating (S3) contains delay time multiplexing (S3-1) based on said predefined delay time multiplexing parameter and code multiplexing (S3-2) based on said predefined multiplexing code.

3.  Method (MET-MS) according to any of the preceding claims, wherein said predefined multiplexing code is a set of code multiplexing parameters for frequency subcarriers of a predefined frequency range (FB) used for operating a transmission channel (RL-1, RL-2, ..., RL-U) between said second network node (BS) and said first network node (MS, MS-1, MS-2, ..., MS-U) and wherein said set of code multiplexing parameters comprises a parameter for each of said frequency subcarriers of said predefined frequency range (FB).

4.  Method (MET-MS) according to any of the preceding claims, wherein said method (MET-MS) further comprises receiving (S1) information (INFO-1, INFO-2, ..., INFO-U) from said second network node (BS) about said predefined delay time multiplexing parameter and said predefined multiplexing code and wherein said at least one reference signal (RS-1, RS-2, ..., RS-U) is generated based on said information (INFO-1, INFO-2, ..., INFO-U).

5.  Method (MET-MS) according to claim 4, wherein said information (INFO-1, INFO-2, ..., INFO-U) is an indicator for a parameter set comprising said predefined delay time multiplexing parameter and said predefined multiplexing code and wherein said method (MET-MS) further comprises selecting (S2) said parameter set based on said indicator from a database (DB-MS) of said first network node (MS, MS-1, MS-2, ..., MS-U) and wherein said database (DB-MS) comprises a mapping between at least two indicators comprising said indicator and at least one further indicator and at least two parameter sets comprising said parameter set and at least one further parameter set having at least one parameter different to said predefined delay time multiplexing parameter or to said predefined multiplexing code.

6.  A method (MET-BS) for a second network node (BS) of a radio communication system (MMCS) comprising:

    - receiving (T5) from at least one first network node (MS, MS-1, MS-2, ..., MS-U) at least one reference signal (RS-1, RS-2, ..., RS-U) generated based on at least one predefined delay time multiplexing parameter and at least one predefined multiplexing code for an unequivocal identification of said at least one reference signal (RS-1, RS-2, ..., RS-U), and
    - determining (T6, T7, T8, T9) at least one channel estimate of at least one transmission channel (RL-1, RL-2, ..., RL-U) from said at least one first network node (MS, MS-1, MS-2, ..., MS-U) to said second network node (BS) based on said received at least one reference signal (RS-1, RS-2, ..., RS-U), based on said at least one predefined delay time multiplexing parameter and based on at least one predefined de-multiplexing code that is correlated to said at least one predefined multiplexing code.

7.  Method (MET-BS) according to claim 6, wherein said determining (T6, T7, T8, T9) of said channel estimates comprises:

    - demodulating (T6) said received at least one reference signal (RS-1, RS-2, ..., RS-U) for obtaining at least one channel impulse response of said at least one transmission channel (RL-1, RL-2, ..., RL-U),
    - delay-time decoupling (T7) of said at least one channel impulse response based on said at least one predefined delay time multiplexing parameter for obtaining at least one filtered channel impulse response,
    - code de-multiplexing (T8) of said at least one filtered channel impulse response based on said at least one predefined de-multiplexing code for obtaining at least one de-multiplexed channel impulse response, and
    - interpolating (T9) said at least one de-multiplexed channel impulse response for obtaining said at least one channel estimate.

8. Method (MET-BS) according to claim 6 or claim 7 further comprising:

   - selecting (T2) said predefined delay time multiplexing parameter and said predefined multiplexing code for said transmission of said at least one first reference signal (RS-1) by said at least one first network node (MS, MS-1, MS-2, ..., MS-U), and
   - transmitting (T3) information (INFO-1, INFO-2, ..., INFO-U) about said predefined delay time multiplexing parameter and said predefined multiplexing code to said at least one first network node (MS, MS-1, MS-2, ..., MS-U) for instructing said at least one first network node (MS, MS-1, MS-2, ..., MS-U) to generate and transmit said at least one first reference signal (RS-1) by applying said predefined delay time multiplexing parameter and said predefined multiplexing code.

9. Method (MET-BS) according to any of the preceding claims 6 to 8, wherein said method (MET-BS) further comprises generating (T1) said predefined multiplexing code or said predefined de-multiplexing code based on a random sequence of integers or rational numbers.

10. Method (MET-BS) according to any of the claims 6 to 9, wherein a number of elements of said predefined multiplexing code is equal to an overall number of subcarriers of a spectral range for operating at least one transmission channel (RL-1, RL-2, ..., RL-U) between said second network node (BS) and said at least one first network node (MS, MS-1, MS-2, ..., MS-U).

11. Method (MET-BS) according to any of the claims 6 to 10, wherein said method (MET-BS) further comprises transmitting (T4) a scheduling instruction (INS1, INS2) to said at least one first network node (MS, MS-1, MS-2, ..., MS-U) instructing said at least one first network node (MS, MS-1, MS-2, ..., MS-U) to transmit said at least one first reference signal (RS-1) during a predefined time range (TR-1) or during a predefined signaling interval.

12. A first network node (MS, MS-1, MS-2, ..., MS-U) for a radio communication system (MMCS) comprising:

    - a processing unit (PU-MS) configured to generate at least one reference signal (RS-1, RS-2, ..., RS-U) based on a predefined delay time multiplexing parameter and a predefined multiplexing code for an unequivocal identification of said at least one reference signal (RS-1, RS-2, ..., RS-U), and
    - a transmitter unit (TM-MS) configured to transmit said at least one reference signal (RS-1, RS-2, ..., RS-U) to said second network node (BS).

13. First network node (MS, MS-1, MS-2, ..., MS-U) according to claim 12, wherein said first network node (MS, MS-1, MS-2, ..., MS-U) is a mobile station.

14. A second network node (BS) for a radio communication system (MMCS) comprising:

    - a receiver unit (R-U) configured to receive from at least one first network node (MS, MS-1, MS-2, ..., MS-U) at least one reference signal (RS-1, RS-2, ..., RS-U) generated based on at least one predefined delay time multiplexing parameter and based on at least one predefined multiplexing code for an unequivocal identification of said at least one reference signal (RS-1, RS-2, ..., RS-U), and
    - a channel estimation unit (DM-U) configured to determine at least one channel estimate of at least one transmission channel (RL-1, RL-2, ..., RL-U) from said at least one first network node (MS, MS-1, MS-2, ..., MS-U) to said second network node (BS) based on said received at least one reference signal (RS-1, RS-2, ..., RS-U), based on said at least one predefined delay time multiplexing parameter and based on at least one predefined de-multiplexing code that is correlated to said at least one predefined multiplexing code.

15. Second network node (BS) according to claim 14, wherein said second network node (BS) is a base station.

*Prior art*

*FIG. 1*

PAS-2

MS-1   MS-2   . . .   MS-U

. . .          . . .

f1   f2      fU  fU+1                    fN

*frequency*

FB

*Prior art*

*FIG. 2*

*FIG. 3*

*FIG. 4*

FIG. 5

MET-MS

START

S1 — Receiving information about parameter set

S2 — Selecting parameter set

S2-1 — Acquiring parameter set from a database

S3 — Receiving scheduling instruction
for transmitting reference signal

S4 — Generating at least one reference signal

S3-1 — Code multiplexing

S3-2 — Delay time multiplexing

S5 — Transmitting at least one reference signal

END

FIG. 6

*FIG. 7*

MET-BS

START

T0 — Operating antenna system in massive MIMO mode

T1 — Generating and storing parameter sets

T2 — Selecting parameter sets

T3 — Transmitting information about the parameter sets

T4 — Transmitting scheduling instructions

T5 — Receiving reference signals

T6 — Demodulating received reference signals

T7 — Delay-time decoupling

T8 — Code de-multiplexing

T9 — Interpolating

T6..T9

END

FIG. 8

Effective CIR

CIR$_1$

CIR$_2$

CIR$_3$

Noise $w$

3L>N

Delay time $\tau$

$\theta_1$          $\theta_2$          $\theta_3$          N

*FIG. 9*

Estimated CIR1

*a)*

CIR$_1$

3L>N

Noise $w$          Delay time $\tau$

$\theta_1$                    $\theta_2$              $\theta_3$          N

Estimated CIR2/3

*b)*

CIR$_2$

3L>N

CIR$_3$          Noise $w$          Delay time $\tau$

$\theta_1$              $\theta_2$                    $\theta_3$          N

*FIG. 10*

FIG. 11

Europäisches
Patentamt

European
Patent Office

Office européen
des brevets

# EUROPEAN SEARCH REPORT

Application Number

EP 15 30 6161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2011/286548 A1 (ROBERT SAFAVI ANAHID [SE] ET AL) 24 November 2011 (2011-11-24)<br>* paragraph [0005] - paragraph [0006] *<br>* paragraph [0010] *<br>* paragraph [0043] *<br>* paragraph [0051] - paragraph [0052] *<br>* figure 10 * | 1-5,12, 13<br>8,9<br>11 | INV.<br>H04L5/00<br>H04L5/02<br>H04L27/26 |
| X<br>Y | US 2008/123616 A1 (LEE JUNG AH [US]) 29 May 2008 (2008-05-29)<br>* paragraph [0001] - paragraph [0002] *<br>* paragraph [0054] *<br>* paragraph [0056] - paragraph [0057] *<br>* paragraph [0076] *<br>* figure 9 * | 6,7,10, 11,14,15<br>8,9 | |
| A | ETSI: "LTE; Evolved Universal Terrestrial Radio Access (E-UTRA); Physical channels and modulation (3GPP TS 36.211 version 10.5.0 Release 10)",<br>3GPP TS 36.211 V10.5.0,<br>1 June 2012 (2012-06-01), XP055172014,<br>* page 66 - page 68 * | 5 | |

TECHNICAL FIELDS
SEARCHED (IPC)

H04L

The present search report has been drawn up for all claims

| Place of search | Date of completion of the search | Examiner |
|---|---|---|
| The Hague | 7 January 2016 | Tanbourgi, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 119 023 A1

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2016

| Patent document cited in search report | | Publication date | Patent family member(s) | | Publication date |
|---|---|---|---|---|---|
| US 2011286548 | A1 | 24-11-2011 | EP | 2384591 A1 | 09-11-2011 |
| | | | US | 2011286548 A1 | 24-11-2011 |
| | | | WO | 2010148550 A1 | 29-12-2010 |
| | | | WO | 2010150057 A1 | 29-12-2010 |
| US 2008123616 | A1 | 29-05-2008 | CN | 101433038 A | 13-05-2009 |
| | | | EP | 2016729 A2 | 21-01-2009 |
| | | | JP | 2009535984 A | 01-10-2009 |
| | | | KR | 20090008274 A | 21-01-2009 |
| | | | US | 2008123616 A1 | 29-05-2008 |
| | | | WO | 2007133411 A2 | 22-11-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *LTE standard Release 8 3GPP TS 36.211 V8.5.0,* December 2008

- **H. GACANIN.** On Channel Estimation for Analog Network Coding in a frequency-Selective Fading Channel. *EURASIP Journal on Wireless Communications and Networking,* vol. 2011